(19) Europäisches Patentamt
European Patent Office
Office européen des brevets

(11) **EP 1 359 184 B1**

(12) **EUROPEAN PATENT SPECIFICATION**

(45) Date of publication and mention
of the grant of the patent:
**11.04.2007  Bulletin 2007/15**

(51) Int Cl.:
*C08J 5/18* (2006.01)

(21) Application number: **03015681.4**

(22) Date of filing: **28.01.2000**

(54) **Heat shrinkable polyester film**

Wärmeschrumpfbarer Polyesterfilm

Feuille en polyester thermorétractable

(84) Designated Contracting States:
**DE FR GB NL**

(30) Priority: **28.01.1999 JP 2083699**
**08.03.1999 JP 6089899**
**23.04.1999 JP 11733899**
**23.04.1999 JP 11733999**
**23.04.1999 JP 11734099**

(43) Date of publication of application:
**05.11.2003  Bulletin 2003/45**

(62) Document number(s) of the earlier application(s) in
accordance with Art. 76 EPC:
**00101814.2 / 1 024 162**

(73) Proprietor: **Toyo Boseki Kabushiki Kaisha**
**Osaka-shi,**
**Osaka 530-8230 (JP)**

(72) Inventors:
• **Ito, Hideki**
**Inuyama-shi,**
**Aichi-ken, 484-8508 (JP)**
• **Hashimoto, Masatosi**
**Inuyama-shi,**
**Aichi-ken, 484-8508 (JP)**
• **Mukouyama, Yukinobu**
**Inuyama-shi,**
**Aichi-ken, 484-8508 (JP)**
• **Tabota, Norimi**
**Inuyama-shi,**
**Aichi-ken, 484-8508 (JP)**
• **Oko, Tsutomu**
**Inuyama-shi,**
**Aichi-ken, 484-8508 (JP)**

(74) Representative: **Müller-Boré & Partner**
**Patentanwälte**
**Grafinger Strasse 2**
**81671 München (DE)**

(56) References cited:
**EP-A- 0 210 646**          **EP-A- 0 267 799**
**EP-A- 0 271 928**          **EP-A- 0 826 482**
**EP-A- 0 934 813**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a heat shrinkable polyester film, and particularly to a heat shrinkable polyester film suitable for use in a label. More particularly, the present invention relates to a heat shrinkable polyester film for use in a multi-packaging label for packaging, inter alia, a stack of cans, which has a good shock resistance during shipping, especially under low temperatures, with a good finish after shrinkage and a sufficient solvent adhesiveness (i.e. , an adhesive property of the film provided by application of a solvent thereon).

Heat shrinkable films made of polyvinyl chloride, polystyrene, or the like, have been widely used in the field of multi-packaging films for use in packaging a stack of cans. In recent years, heat shrinkable polyester films have been attracting public attention as more problems have been found to exist with the former materials. That is, polyvinyl chloride products generate a chlorine gas when incinerated, and it is difficult to print on polystyrene products.

However, when a stack of articles is shrink-packaged with a label of a conventional heat shrinkable polyester film, a flaw is likely to occur due to, for example, a shock applied when the article stack hits another article stack during shipping or a friction between the article stack and the outer packaging box therearound. Moreover, because such a conventional film is drawn in one direction in the production process, the film is likely to be torn for a substantial length along its main shrinkage direction, in which case the film can no longer hold articles therein, thereby detracting from the commercial value of the articles. Even a state-of-the-art multi-packaging polyvinyl chloride film, which is supposed to be flexible and tear-resistant, may be torn especially under low temperatures.

One possible way to prevent such tearing along a particular direction is to orient a film along a direction perpendicular to its main shrinkage direction as well as the main shrinkage direction. However, when the film is oriented along these two directions with a poor balance between the directions, the film may be shrunk with a poor balance between the directions, thereby resulting in a poor finish after shrinkage. Moreover, when a tube is produced from the film by using an environmentally preferred chlorine-free solvent, a sufficient solvent adhesiveness cannot be obtained.

In recent years, a container (e.g., a bottle) for beverage, food, etc., is provided with a so-called "cap seal" wrapped around the cap or lid of the container. The cap seal is provided not only for decorative purposes but also for purposes of preventing someone from mixing poison into the contained product. A heat shrinkable film of polyvinyl chloride, polystyrene, or the like, has been widely used in a cap sealing label, as in a general purpose label. However, as already noted above, more problems have been found to exist with these materials (polyvinyl chloride products generate a chlorine gas when incinerated, and it is difficult to print on polystyrene products). Moreover, in order to effectively recycle PET bottles, it is necessary to collect non-PET labels made of polyvinyl chloride, polystyrene, etc., separately from PET labels. Thus, there is a need for cap sealing labels made of these environmentally preferred polyester heat shrinkable films.

A cap seal may be produced as follows. First, a sheet of heat shrinkable film having a predetermined size is rolled into a tubular shape with two of its opposite edges bonded together. Then, the tubular film is cut into smaller tubular label pieces.

There are two ways as follows that are typically employed in cap sealing processes. One way is to directly place a label produced as described above around the container and shrink the label onto the container. The other way is to first shrink the label onto a metal mold to provide a "preform" product, and then further shrink the label onto the container. In either case, when the label is heat-shrunk; the bonded portion (backlining portion) of the label desirably stays bonded together. If the bonded portion falls apart, the productivity decreases substantially.

Moreover, the shape characteristics of the label after it is heat-shrunk are also important. It is undesirable that the label does not shrink enough, or the shrunk label has creasage, shrinkage non-uniformity, distortion, or jumping. Particularly when the label is used for a food container, it is in many cases undesirable for the label to get moist. Therefore, in such a case, the heat shrinkage process is typically done using hot air instead of steam. When using hot air, however, the heat efficiency is lower than that when using steam, whereby it is likely that the film does not shrink enough, or the shrunk label has creasage, shrinkage non-uniformity, distortion.

EP 0 267 799 A2 describes a shrinkable polyester film for applying to bottles and other articles comprising not less than 50 mol% of ethylene terephthalate units and having a birefringence of from 0.040 to 0.150, a shrinkage of not less than 40% in one of the machine direction and the transverse direction and a shrinkage of not more than 20% in the other of said directions after 5 min treatment in an oven at 100˚C, and a heat of fusion of not less than 8.37 kJ/kg (2 cal/g).

When the heat shrinkable film is used as a cap sealing label with nothing printed thereon, in many cases, the film is also required to have transparency.

The present invention provides the subject matter defined in the claims.

According to this invention, a heat shrinkable polyester film has a transverse tear defect percentage of 20% or less as determined in the following vibration test: the film is rolled into a tubular shape, two of its opposite edges bonded together, and then the tubular film is placed around a vertical stack (total weight: 660 g) of three food container cans each having a diameter of 72 mm and a height of 55 mm; the can stack with the tubular film placed therearound is passed through a shrink tunnel to shrink the tubular film onto the can stack; a total of 18 packs of such can stacks are placed into a cardboard box having a length of 455 mm, a width of 230 mm and a height of 165 mm (6 packs in the length direction by 3 packs in the width direction), and the cardboard box is sealed; the cardboard box is vibrated along the width direction for 30 min by a stroke of 50 mm and at a vibration rate of 180 reciprocations/min, after which the transverse tearage of the tubular film is visually observed; and the transverse tear defect percentage (%) is determined based on the number of defective packs per 18 packs, wherein the defective pack is any pack having a tear flaw of 30 mm or longer along a can periphery.

The film has a longitudinal refractive index Nx and a transverse refractive index Ny which satisfy the following expressions (1) and (2):

$$1.561 < Nx < 1.566 \qquad (1);$$

and

$$0.040 < Ny - Nx < 0.070$$

the film has a shrinkage of 50% or more along its main shrinkage direction when the film is put in hot water of 95° C for 10 sec, and
the film has a shrinkage of 10% to 25% along a direction perpendicular to its main shrinkage direction when the film is put in hot water of 95° C for 10 sec.

In one embodiment of the invention, the film has a solvent adhesiveness with 1,3-dioxolane.

In one embodiment of the invention, the film can be used as a multi-packaging film.

Thus, the invention described herein makes possible the advantages of: (1) providing a heat shrinkable polyester film which has a good shock resistance during shipping especially under low temperatures, with a good finish after shrinkage and a sufficient solvent adhesiveness; and (2) providing a heat shrinkable polyester film having such properties for use in a multi-packaging label for packaging, inter alia, a stack of cans.

These and other advantages of the present invention will become apparent to those skilled in the art upon reading and understanding the following detailed description with reference to the accompanying figures.

Figure 1 is a schematic diagram illustrating a vibration test for a heat shrinkable polyester film;

Figure 2 is a diagram illustrating a vibration test for a heat shrinkable polyester film;

Figure 3 is a diagram illustrating a case where a tear flaw has occurred in a film along a can periphery;

A heat shrinkable polyester film according to an embodiment of the present invention will now be described.

(Heat shrinkable polyester film suitable for use as multi-packaging film)

Preferred polyesters for use in a heat shrinkable polyester film of the present invention suitable for use as a multi-packaging film typically include polyethylene terephthalate, polyethylene naphthalate, and other polyesters obtained by copolymerizing such polyesters with an acid component or a long-chain glycol component of an aliphatic compound.

According to the present invention, in addition to the acid components of the polyester comprising terephthalic acid or naphthalenedicarboxylic acid, it is possible to use one or more known dicarboxylic acids such as oxalic acid, malonic acid, succinic acid, adipic acid, azelaic acid, isophthalic acid, decanedicarboxylic acids, and dimer acid. Moreover, in addition to the diol component comprising butanediol, it is possible to use one or more known diols such as ethylene glycol, neopentyl glycol, hexamethylene glycol, 1,4-cyclohexane dimethanol, dimer acid diol, and ethylene-oxide-added tetramethylene glycol.

In order to obtain a heat shrinkable polyester film which is determined to be desirable in a vibration test, it is preferred to use neopentyl glycol as one of the diol components.

Moreover, in order to improve the smoothness of the heat shrinkable polyester film, the film preferably contain an inorganic lubricant and/or an organic lubricant. Optionally, the film may contain further additives such as a stabilizer, a coloring agent, an antioxidant, a defoamer, and an antistatic agent.

The heat shrinkable polyester film of the present invention is required to have a transverse tear defect percentage of 20% or less, and preferably about 10% or less, as determined in a vibration test. When the transverse tear defect percentage exceeds 20%, the film is likely to have many tears during actual shipping.

In the present invention, the refractive indices Nx, Ny of the film satisfies the following expressions (1) and (2):

$$1.561 < Nx < 1.566 \qquad (1);$$

and

$$0.040 < Ny - Nx < 0.070 \qquad (2).$$

The more preferred range of the refractive index Nx is 1.562 to 1.565. The more preferred range of the value (Ny-Nx) is 0.050 to 0.060. When the refractive index Nx is less than 1.561, the strength of the film against transverse tears may be insufficient. When the refractive index Nx exceeds 1.566, the shrinkage of the film along a direction perpendicular to the main shrinkage direction increases, thereby decreasing the shrunk finish property.

When the value (Ny-Nx) is less than 0.040, the shrinkage balance between the longitudinal direction and the transverse direction of the film may be poor, resulting in shrinkage non-uniformity. When the value (Ny-Nx) exceeds 0.070, the transverse tear defect percentage increases.

The film of the present invention has a shrinkage of 50% or more, and more preferably about 55% or more, along its main shrinkage direction when the film is put in hot water of 95˚ C for 10 sec. When the hot water shrinkage along the main shrinkage direction is less than 50%, it is likely that the film does not shrink enough, or the shrunk label has shrinkage non-uniformity, thereby resulting in a poor finish.

The film of the present invention has a shrinkage of 10% to 25%, and more preferably about 10 % to about 20 % , along a direction perpendicular to its main shrinkage direction when the film is put in hot water of 95˚ C for 10 sec. When the hot water shrinkage along this direction is less than 10%, the strength of the film against transverse tears may be insufficient. When hot water shrinkage along this direction exceeds 25%, the shrunk film may have shrinkage non-uniformity or jumping, thereby resulting in a poor finish.

Preferably, the film of the present invention has a solvent adhesiveness with 1,3-dioxolane.

In order to achieve the objects of the present invention, a polyester film having its main shrinkage direction along the transverse (or width) direction is more practical. Therefore, an exemplary film production method where the film has its main shrinkage direction along the transverse direction will be described below. However, it is understood that the present invention is also applicable to a case where the film has its main shrinkage direction along the longitudinal direction.

According to the present invention, a polyester material is first dried by using a dryer or vacuum dryer such as a hopper dryer or a paddle dryer. Then, the polyester material is extruded at a temperature of 200˚C to 300˚C, and rapidly cooled to obtain an undrawn film. In order to produce a heat shrinkable polyester film having its main shrinkage direction along the transverse direction, the obtained undrawn film is typically drawn longitudinally by a drawing factor of 1.1 to 1.3 at 80˚C to 95˚C, and then drawn laterally by a drawing factor of 3 to 5 at 70˚C to 85˚C. It is understood that any other drawing condition may alternatively be set for this process.

(Polyester)

The dicarboxylic acid component of the polyester may include aromatic dicarboxylic acids (e:g., terephthalic acid, isophthalic acid, naphthalenedicarboxylic acid, and orthphthalic acid), aliphatic dicarboxylic acids (e.g., adipic acid, azelaic acid, sebacic acid, and decanedicarboxylic acids), alicyclic dicarboxylic acids, or the like.

Where the polyester contains an aliphatic dicarboxylic acid(s) (e.g., adipic acid, sebacic acid, decanedicarboxylic acid, or the like), the content of the aliphatic dicarboxylic acid is preferably less than 3 mol% (this applies to all the dicarboxylic acid components used). A heat shrinkable polyester film obtained by using a polyester which contains 3 mol% or more of such an aliphatic dicarboxylic acid (s) may not have a sufficient rigidity in high-speed processes.

The polyester preferably does not contain a polyvalent carboxylic acid whose valence is 3 or more (e. g. , a trimellitic acid, a pyromellitic acid, or anhydride thereof). If the polyester contains such a polyvalent carboxylic acid, the content thereof is preferably 3 mol% or less. With a heat shrinkable polyester film obtained by using a polyester containing such a polyvalent carboxylic acid, a sufficient shrinkage may not be achieved.

A diol component of the polyester to be used in the present invention may include aliphatic diols (e.g., ethylene glycol, propane diol, butane diol, neopentyl glycol, hexane diol, or the like), alicyclic diols (e.g., 1,4-cyclohexane dimethanol), aromatic diols, or the like.

A polyester used in the heat shrinkable polyester film of the present invention is preferably a polyester whose glass-transition temperature (Tg) is adjusted to 60°C to 75°C by mixing therein one or more diols whose carbon number is 3 to 6 (e.g., propane diol, butane diol, neopentyl glycol, and hexane diol).

In order to obtain a heat shrinkable polyester film having a particularly desirable shrunk finish property, it is preferred to use neopentyl glycol as one of the diol components, preferably in an amount of 15 mol% to 25 mol% (this applies to all the diol components used).

It is preferable not to include a diol whose carbon number is 8 or more (e.g., octanediol) or a polyalcohol whose valence is 3 or more (e.g., trimethylolpropane, trimethylolethane, glycerin, and diglycerin). If such a diol or such a polyalcohol is included, the content thereof is preferably 3 mol% or less. With a heat shrinkable polyester film obtained by using a polyester containing such a diol or such a polyalcohol, a sufficient shrinkage may not be achieved.

The polyester preferably contains the least amount possible of diethylene glycol, triethylene glycol, and polyethylene glycol. Particularly, diethylene glycol is likely to be present because it is a byproduct from a polyester polymerization process. Nevertheless, in the polyester used in the present invention, the content of diethylene glycol is preferably less than 4 mol%.

When two or more polyesters are mixed together, the acid component content or the diol component content is the content with respect to the acid component or the diol component, respectively, of all the polyesters. These contents are irrespective of whether ester interchange occurs after mixing.

The above-described polyesters can be produced by any conventional method. For example, the polyester can be obtained by using, for example, a direct esterification method, where a dicarboxylic acid and a diol are directly reacted with each other, or a transesterification method, where a dimethyl dicarboxylate and a diol are reacted with each other. The polymerization may be performed either in a batch process or a continuous process.

(Examples)

The present invention will now be described in greater detail by way of examples. However, the present invention is not limited to these examples, but other examples may be possible without departing from the scope of the present invention.

The evaluation methods used in the present invention will now be described with reference to Table 1 below.

(1) Heat shrinkage

A sheet of film was cut into 10 cmx10 cm pieces, and subjected to a no-load treatment in hot water at a temperature $\pm0.5°C$ of a predetermined temperature so as to heat-shrink the film. Then, the longitudinal and transverse dimensions of the film were measured so as to obtain the heat shrinkage of the film according to the following expression (Expression 1). The direction along which the heat shrinkage was greater was assumed to be the main shrinkage direction of the film.

**(Expression 1)**

$$\text{Heat shrinkage} = \{(\text{length before shrinkage} - \text{length after shrinkage}) / \text{length before shrinkage}\} \times 100 \, (\%)$$

(2) Refractive index

An Abbe refractometer was used to measure the refractive index of the film along the longitudinal, transverse and thickness directions of the film.

In Table 1 below, the refractive index of the film along the longitudinal direction (main shrinkage direction) is denoted by Nx, and the refractive index along the transverse direction (direction perpendicular to the main shrinkage direction) is denoted by Ny.

(3) Solvent adhesiveness

The film was rolled into a tubular shape with two of its opposite edges bonded together with 1,3-dioxolane. The tubular film was cut into smaller pieces (samples) each having a width of 15 mm in a transverse direction which is perpendicular to the direction along which the film runs through the processing system. The bonded portion was pulled along the transverse direction and peeled apart. In the column "Solvent adhesiveness" in Table 1, "○" indicates a sample which had a sufficient peel resistance.

(4) Shrunk finish property

Each sample was placed around commercially available food container cans ("Friskie" manufactured by Friskie) and passed through Universal Shrinker (Model: K2000) manufactured by Kyowa Denki for a shrinker passage time of 15 sec (zone 1 temperature/zone 2 temperature)=(170˚C/170˚C) to shrink the sample onto the cans. The finish property of each shrunk sample was evaluated as follows (10 samples were evaluated). After the evaluation, each sample was marked as follows.

○: No apparent defect observed
×: Crease or insufficient shrinkage observed

(5) Vibration test

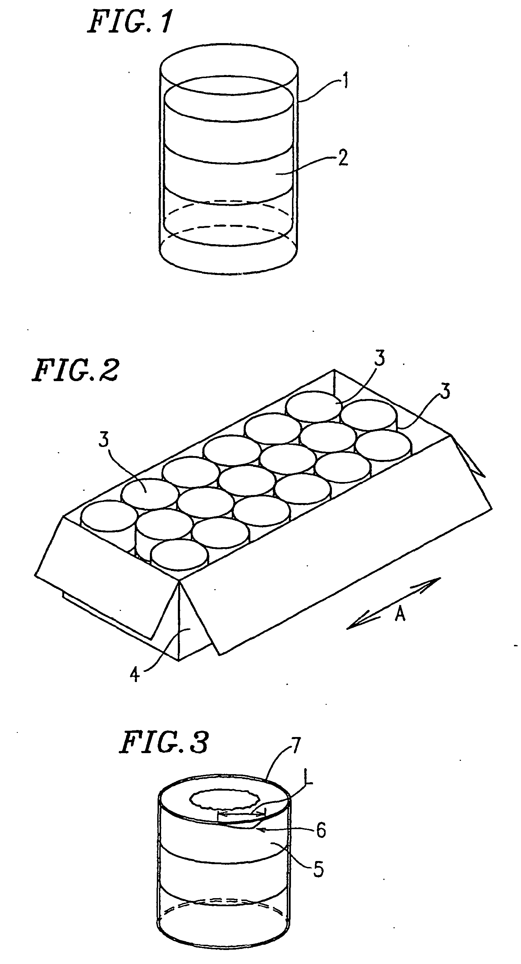

Referring to Figure 1, each film sample was rolled into a tube 1, with two of its opposite edges being bonded together, and then the tube 1 was placed around a vertical stack 2 (total weight: 660 g) of three food container cans each having a diameter of 72 mm and a height of 55 mm. The can stack 2 with the tube 1 placed therearound was passed through a shrink tunnel to shrink the tube 1 onto the can stack 2. Then, as shown in Figure 2, a total of 18 packs of such can stacks 3 were placed into a cardboard box 4 having a length of 455 mm, a width of 230 mm and a height of 165 mm (6 packs in the length direction by 3 packs in the width direction), and the cardboard box 4 was sealed.
The cardboard box 4 was vibrated along the longitudinal direction (indicated by arrow A in the figure) for 30 min by a stroke of 50 mm and at a vibration rate of 180 reciprocations/min, after which the transverse tearage of the tube 1 was visually observed.
Referring to Figure 3, the defect percentage (%) was determined based on the number of defective packs per 18 packs, wherein the defective pack was any pack having a tear flaw 6 whose length ("L" in Figure 3) is 30 mm or longer in a film 7 along a periphery of the can 5. Then, a sample having a defect percentage of 20% or less was marked "○ ", and a sample having a defect percentage exceeding 20% less was marked "×".

(6) Actual shipping test

Three of such cardboard boxes 4 as described above in the section "Vibration test" were transported by land over a predetermined distance. The defect percentage (%) was determined based on the number of defective packs per 54 packs. Then, a sample having a defect percentage of 20% or less was marked "○", and a sample having a defect percentage exceeding 20% less was marked "×".
The following polyesters (Polyesters A-E) were used in the examples and comparative examples to be described below.

Polyester A: polyethylene terephthalate (intrinsic viscosity (IV): 0.75 dl/g).
Polyester B: a polyester comprising 100 mol% of terephthalic acid, 70 mol% of ethylene glycol, and 30 mol% of neopentyl glycol (IV: 0.72 dl/g)
Polyester C: polybutylene terephthalate (IV: 1.20 dl/g)
Polyester D: a polyester comprising 100 mol% of terephthalic acid, 85 mol% of butanediol, and 15 mol% of polytetramethylene glycol (molecular weight: 1000) (IV: 1.50 dl/g)
Polyester E: a polyester elastomer comprising a copolymer polyester of 70 wt% of Polyester C and 30 wt% of ε-caprolactone (reduced viscosity ($\eta^{sp/c}$): 1.30 dl/g)

(Example 1)

A polyester obtained by mixing together 37 wt% of Polyester A, 53 wt% of Polyester B and 10 wt% of Polyester C, as shown in Table 1, was melted and extruded through a T die at a temperature of 280˚C, and rapidly cooled down by using a chill roll to obtain an undrawn film. The undrawn film was drawn in the longitudinal direction by a drawing factor of 1.1 by using a multi-stage roll type vertical drawer (roll temperature: 80˚C), and then drawn with a tenter in the transverse direction at the film temperature of 73˚C by a drawing factor of 3.9. The film was then subjected to a heat treatment at 82˚C for 10 sec to obtain a heat shrinkable polyester film having a thickness of 45 μm.

(Examples 2-4 and Comparative Examples 1-4)

A heat shrinkable polyester film having a thickness of 45 $\mu$m was obtained in a manner similar to that of Example 1 except that different polyester ratio and drawing conditions were used as shown in Table 1.

The evaluation results for the respective films of Examples 1-4 and Comparative Examples 1-4 are shown together in Table 1.

## Table 1

|  | Material | | |
|---|---|---|---|
|  | Polyester A | Polyester B | Polyester C |
| Example 1 | 37 | 53 | 10 |
| Example 2 | 37 | 53 | 10 |
| Example 3 | 30 | 60 | 10 |
| Example 4 | 26 | 50 | 24 |
| Comparative example 1 | 37 | 53 | 10 |
| Comparative example 2 | 26 | 50 | 24 |
| Comparative example 3 | 10 | 66 | 24 |
| Comparative example 4 | 15 | 75 | 10 |

| | Film production condition | | | | Hot water shrinkage 95°C · 10 sec (%) | | Refractive index | | Solvent adhesiveness | Shrunk finish property | Shock resistance in vibration test | Shock resistance in actual shipping |
|---|---|---|---|---|---|---|---|---|---|---|---|---|
| | Longitudinal drawing | | Transverse drawing | | | | | | | | | |
| | Drawing temperature | Drawing factor | Drawing temperature | Drawing factor | Longitudinal | Transverse | Nx | Ny−Nx | | | | |
| Example 1 | 80 | 1.1 | 73 | 3.9 | 14.0 | 62.0 | 1.562 | 0.061 | ○ | ○ | 11 ○ | ○ |
| Example 2 | 80 | 1.3 | 77 | 3.9 | 21.0 | 64.0 | 1.563 | 0.050 | ○ | ○ | 11 ○ | ○ |
| Example 3 | 80 | 1.2 | 77 | 3.9 | 18.0 | 65.0 | 1.562 | 0.055 | ○ | ○ | 17 ○ | ○ |
| Example 4 | 80 | 1.3 | 77 | 3.9 | 19.0 | 70.0 | 1.563 | 0.060 | ○ | ○ | 17 ○ | ○ |
| Comparative example 1 | — | (1.0) | 73 | 3.9 | 7.0 | 60.0 | 1.560 | 0.072 | ○ | ○ | 56 × | × |
| Comparative example 2 | 80 | 1.1 | 77 | 3.9 | 13.0 | 70.0 | 1.560 | 0.068 | ○ | ○ | 56 × | × |
| Comparative example 3 | 80 | 1.2 | 78 | 3.9 | 15.0 | 68.0 | 1.561 | 0.044 | ○ | ○ | 44 × | × |
| Comparative example 4 | 80 | 1.2 | 76 | 3.9 | 16.0 | 74.0 | 1.558 | 0.059 | ○ | ○ | 50 × | × |

EP 1 359 184 B1

As is apparent from Table 1, each of the heat shrinkable polyester films obtained in Examples 1-4 exhibits a good shrunk finish property (no defects such as insufficient shrinkage, crease, distortion are observed), a good solvent adhesiveness, a good shock resistance in the vibration test and a good shock resistance in the actual shipping test.

Thus, the heat shrinkable polyester film of the present invention is a film having a high quality and a high practicability which is suitable as a multi-packaging label for cans and can be used under low temperatures.

On the contrary, the heat shrinkable polyester films obtained in Comparative Examples 1-4 exhibited a poor shock resistance. Thus, each of the heat shrinkable polyester films of the comparative examples exhibited a poor quality and a poor practicability.

Thus, the heat shrinkable polyester film of the present invention has a good shock resistance during shipping especially under low temperatures, with a good finish after shrinkage and a sufficient solvent adhesiveness.

Therefore, the heat shrinkable polyester film of the present invention is suitable for use in a multi-packaging label for packaging, inter alia, a stack of cans.

Various other modifications will be apparent to and can be readily made by those skilled in the art without departing from the scope of this invention. Accordingly, it is not intended that the scope of the claims appended hereto be limited to the description as set forth herein, but rather that the claims be broadly construed.

**Claims**

1. A heat shrinkable polyester film produced by longitudinal drawing using a drawing factor of 1.1 to 1.3 at 80°C to 95°C, said heat shrinkable polyester film having a transverse tear defect percentage of 20% or less as determined in the following vibration test:

   the film is rolled into a tubular shape, two of its opposite edges bonded together, and then the tubular film is placed around a vertical stack, total weight: 660 g, of three food container cans each having a diameter of 72 mm and a height of 55 mm; the can stack with the tubular film placed therearound is passed through a shrink tunnel to shrink the tubular film onto the can stack; a total of 18 packs of such can stacks are placed into a cardboard box having a length of 455 mm, a width of 230 mm and a height of 165 mm, 6 packs in the length direction by 3 packs in the width direction, and the cardboard box is sealed; the cardboard box is vibrated along the width direction for 30 min by a stroke of 50 mm and at a vibration rate of 180 reciprocations/min, after which the transverse tearage of the tubular film is visually observed; and the transverse tear defect percentage (%) is determined based on the number of defective packs per 18 packs, wherein the defective pack is any pack having a tear flaw of 30 mm or longer along a can periphery,

   wherein the film has a longitudinal refractive index Nx and a transverse refractive index Ny which satisfy the following expressions (1) and (2):

   $$1.561 < Nx < 1.566 \qquad (1);$$

   and

   $$0.040 < Ny - Nx < 0.070 \qquad (2),$$

   wherein the film has a shrinkage of 50% or more along its main shrinkage direction when the film is put in hot water of 95°C for 10 sec, and
   wherein the film has a shrinkage of 10% to 25% along a direction perpendicular to its main shrinkage direction when the film is put in hot water of 95°C for 10 sec.

2. The heat shrinkage polyester film according to claim 1, wherein the film has a solvent adhesiveness with 1,3-dioxolane.

3. The heat shrinkable polyester film according to claim 1 or 2, wherein the film can be used as a multi-packaging film.

**Patentansprüche**

1. Wärmeschrumpfbare Polyesterfolie, die durch Strecken in Längsrichtung unter Anwendung eines Streckfaktors von 1,1 bis 1,3 bei 80˚C bis 95˚C hergestellt ist, wobei die wärmeschrumpfbare Polyesterfolie einen Querrißdefektprozentsatz von 20% oder weniger, wie in dem folgenden Vibrationstest bestimmt, aufweist:

   die Folie wird in eine röhrenförmige Form aufgerollt, zwei von deren gegenüberliegenden Kanten werden verbunden und anschließend wird die röhrenförmige Folie um einen vertikalen Stapel, Gesamtgewicht: 660 g, aus drei Nahrungsmittelbehälterdosen herum angeordnet, wobei jede einen Durchmesser von 72 mm und eine Höhe von 55 mm aufweist; der Dosenstapel mit der darum angeordneten röhrenförmigen Folie wird durch einen Schrumpfungstunnel geführt, um die röhrenförmige Folie auf den Dosenstapel zu schrumpfen; insgesamt werden 18 Pakete derartiger Dosenstapel in einer Kartonkiste mit einer Länge von 455 mm, einer Breite von 230 mm und einer Höhe von 165 mm angeordnet, 6 Pakete in Längenrichtung und 3 Pakete in Breitenrichtung, und die Kartonkiste wird versiegelt; die Kartonkiste wird entlang der Breitenrichtung für 30 min durch einen Stoß bzw. Schlag von 50 mm und bei einer Vibrationsrate von 180 Hin-und-Her-Bewegungen/min vibrieren gelassen, wonach der Querrißdefektprozentsatz der röhrenförmigen Folie visuell beobachtet wird; und der Querrißdefektprozentsatz (%) wird auf Basis der Anzahl defekter Pakete pro 18 Pakete bestimmt, wobei ein defektes Paket jedes Paket mit einem Rißfehler von 30 mm oder mehr entlang einer Dosenperipherie ist,

   wobei die Folie einen Brechungsindex in Längsrichtung Nx und einen Brechungsindex in Querrichtung Ny aufweist, welche die folgenden Ausdrücke (1) und (2) erfüllen:

   $$1,561 < Nx < 1,566 \qquad (1)$$

   und

   $$0,040 < Ny - Nx < 0,070 \qquad (2),$$

   wobei die Folie eine Schrumpfung von 50% oder mehr entlang deren Hauptschrumpfungsrichtung aufweist, wenn die Folie für 10 sec in heißes Wasser von 95˚C getaucht wird, und die Folie eine Schrumpfung von 10% bis 25% entlang einer Richtung, die senkrecht zu der Hauptschrumpfungsrichtung liegt, aufweist, wenn die Folie für 10 sec in heißes Wasser von 95˚C getaucht wird.

2. Wärmeschrumpfbare Polyesterfolie nach Anspruch 1, wobei die Folie eine Lösungsmittelhaftfähigkeit mit 1,3-Dioxolan aufweist.

3. Wärmeschrumpfbare Polyesterfolie nach Anspruch 1 oder 2, wobei die Folie als eine Mehrfachverpackungsfolie verwendet werden kann.

**Revendications**

1. Film en polyester thermorétractable produit par étirement longitudinal en utilisant un facteur d'étirement de 1,1 à 1,3, à une température de 80 ˚C à 95 ˚C, ledit film en polyester thermorétractable ayant un pourcentage de défaut de déchirure transversale de 20 % ou moins, comme déterminé dans l'essai de vibration suivant :

   le film est enroulé selon une forme tubulaire, deux de ses bords opposés étant liés ensemble, puis le film tubulaire est placé autour d'une pile verticale, dont le poids total est de 660 g, de trois boîtes de conserve ayant chacune un diamètre de 72 mm et une hauteur de 55 mm ; la pile de boîtes entourée par le film tubulaire traverse un tunnel de rétraction pour rétracter le film tubulaire sur la pile de boîtes ; un total de 18 paquets de ces piles de boîtes sont placés dans une boîte en carton ayant une longueur de 455 mm, une largeur de 230 mm et une hauteur de 165 mm, 6 paquets dans le sens de la longueur sur 3 paquets dans le sens de la largeur, et la boîte en carton est fermée hermétiquement ; la boîte en carton est amenée à vibrer sur toute sa largeur pendant 30 minutes pour une course de 50 mm, et à une vitesse de vibration de 180 vibrations/min, après quoi la déchirure transversale du film tubulaire est observée visuellement ; et le pourcentage de défaut de déchirure transversale (%) est déterminé en fonction du nombre de paquets défectueux par groupe de 18 paquets, dans lequel le paquet défectueux est tout paquet ayant un défaut de déchirure de 30 mm ou plus le long de la périphérie d'une boîte,

dans lequel le film a un indice de réfraction longitudinale Nx et un indice de réfraction transversale Ny qui satisfont aux expressions suivantes (1) et (2) :

$$1{,}561 < \mathrm{Nx} < 1{,}566 \ (1) \ ;$$

et

$$0{,}040 < \mathrm{Ny} - \mathrm{Nx} < 0{,}070 \ (2),$$

dans lequel le film a un retrait de 50 % ou plus le long de sa direction de retrait principale, lorsque le film est placé dans l'eau chaude à 95 ˚C pendant 10 secondes, et
dans lequel le film a un retrait de 10 % à 25 % le long d'une direction perpendiculaire à sa direction de retrait principale, lorsque le film est placé dans l'eau chaude à une température de 95 ˚C pendant 10 secondes.

2. Film en polyester thermorétractable selon la revendication 1, dans lequel le film a une adhésivité au solvant avec le 1,3-dioxolane.

3. Film en polyester thermorétractable selon la revendication 1 ou 2, dans lequel le film peut être utilisé comme film pour plusieurs emballages.

*FIG.1*

*FIG.2*

*FIG.3*